(19) Europäisches Patentamt
European Patent Office
Office européen des brevets

(11) Veröffentlichungsnummer: **0 211 154 B1**

(12) **EUROPÄISCHE PATENTSCHRIFT**

(45) Veröffentlichungstag der Patentschrift: **18.08.93**

(51) Int. Cl.⁵: **C08J 3/24**, C08L 23/00, C08L 51/06, C08K 5/54

(21) Anmeldenummer: **86106078.8**

(22) Anmeldetag: **02.05.86**

# (54) Vernetzte Formkörper mit erhöhter Schlagzähigkeit aus ternären Polyolefin-Formmassen und deren Herstellung.

(30) Priorität: **05.06.85 DE 3520106**
**05.06.85 DE 3520151**

(43) Veröffentlichungstag der Anmeldung:
**25.02.87 Patentblatt 87/09**

(45) Bekanntmachung des Hinweises auf die Patenterteilung:
**18.08.93 Patentblatt 93/33**

(84) Benannte Vertragsstaaten:
**AT BE CH DE FR GB IT LI LU NL SE**

(56) Entgegenhaltungen:
**DE-A- 2 856 175**
**DE-A- 2 856 369**
**GB-A- 2 116 986**

(73) Patentinhaber: **Dynamit Nobel Aktiengesellschaft**

**D-53839 Troisdorf(DE)**

(72) Erfinder: **Spielau, Paul, Dr.**
**Van-Gogh-Platz 10**
**D-5210 Troisdorf-Eschmar(DE)**
Erfinder: **Klaar, Karlo**
**Unterdorfstrasse 56a**
**D-5216 Niederkassel-Mondorf(DE)**
Erfinder: **Kühnel, Werner**

**D-5206 Neunkirchen-Schöneshof(DE)**
Erfinder: **Leng, Robert**
**An der Ludwigshöhe 39**
**D-8832 Weissenburg(DE)**
Erfinder: **Sautner, Anton**
**Schlesier Strasse 4**
**D-8830 Treuchtlingen(DE)**

EP 0 211 154 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft vernetzte Formkörper, hergestellt aus ternären Polyolefin-Formmassen mit Gehalten von vernetzend wirkenden Zusätzen sowie ein Verfahren zum Herstellen derselben durch Spritzguß, Extrusion oder Kalandrierung.

Polypropylen als Massenkunststoff besitzt neben günstigen Eigenschaften, wie niedriger Dichte, guter Beständigkeit gegen erhöhte Temperaturen auch weniger günstige Eigenschaften, wie mangelnde Kälteschlagfestigkeit. Für zahlreiche Anwendungen ist z.B. eine ausreichende Kälteschlagfestigkeit erforderlich, beispielsweise für Transportkästen, Koffer, Automobilteile o. dgl. Aus diesem Grunde ist es bekannt, Polypropylen durch Zusatz anderer Thermoplaste zu modifizieren.

Verbesserte Schlagzähigkeiten weisen beispielsweise ternäre Formmassen auf, in denen zusätzlich zu Polypropylen-Homopolymeren und/oder -Copolymeren Anteile von Ethylen-$\alpha$-Olefin-Copolymeren oder entsprechenden -Terpolymeren mit Gehalten einer Dien-Komponente sowie als dritte Komponente Polyethylen Verwendung finden, beispielsweise nach DE-PS 30 12 804, 30 12 805 und 30 12 763.

Desweiteren hat man bereits versucht, die Eigenschaften von thermoplastischen Formmassen durch Vernetzung derselben nach DE-OS 33 27 149 zu verbessern. Dort wird ein Verfahren zur Herstellung von Halbzeug durch Aufpfropfung von Silanverbindung und einem Peroxid beschrieben. Dieses Verfahren ist auf ein bestimmtes, im wesentlichen isotaktisches Polypropylen begrenzt. Es werden in zwei Stufen Formkörper hergestellt, wobei zuerst ein unvernetztes Halbzeug entsteht durch z.B. Ummanteln eines textilen Flächenbildes mit noch unvernetztem Extrudat entsteht der endgültige Formkörper, worauf durch Erwärmen, ggf. in Gegenwart von Wasser, oder Lagern bei ggf. erhöhter Temperatur der endgültige Vernetzungsgrad erreicht wird. Diese Mehrstufigkeit des Herstellwegs ist nachteilig.

Vernetzte ternäre Polypropylen-Formmassen werden in der DE-OS 33 46 267 vorgeschlagen, wonach ein modifiziertes Polypropylenharz in der ternären Mischung eingesetzt wird, dem zuvor bestimmte ethylenische ungesättigte Silanverbindungen in einem gesonderten Prozess mit Hilfe von Peroxiden aufgepropft werden. Hierbei ist das dem Mischen der Formmasse vorausgehende Aufpropfen als zusätzlicher Arbeitsschritt nachteilig, zumal auch eine zweite Komponente der Formmasse gepfropft werden muß, wenn gute Eigenschaften erreicht werden sollen. Weiterhin sind die Formmassen nach DE-OS 33 46 267 auf solche mit 60 bis 90 Gew.-% Polypropylen begrenzt und enthalten nur 5 bis 20 Gew.-% der Ethylen-$\alpha$-Olefin-Copolymeren, bzw. der entsprechenden -Terpolymeren, was den Einsatz für hochkälteschlagfeste Produkte ausschließt. Es wird dort ausdrücklich gesagt, daß mit anderen Mengenverhältnissen nicht befriedigende Schlagfestigkeiten und Härte erzielt werden und weiterhin, daß die Pfropfmodifizierung der gesamten Formmasse keine guten Eigenschaften der Formkörper ergibt (DE-OS 33 46 267, S. 13, Z. 1 bis 7).

Die DE-OS 28 56 175 beschreibt eine Umhüllung für ein elektrisches Freileitungskabel, die aus einem Werkstoff besteht, der einen Verschnitt aus einem Polymer bzw. Polymergemisch und einer elastifizierenden kautschukartigen Komponente auf Polymerbasis darstellt. Dieses Polymergemisch ist durch Aufpfropfen von Silanverbindungen auf die Polymermoleküle durch Feuchtigkeitseinwirkung vernetzbar. Als Polymergemisch kann beispielsweise auch eine Mischung aus isotaktischem Polypropylen und Hart-Polyethylen eingesetzt werden, wobei der Polypropylenanteil nicht an der Silanvernetzung teilnimmt. Bei dem eingesetzten Werkstoff handelt es sich nicht um ein silanvernetztes Polypropylen, sondern um ein vernetztes Polyethylen.

Die DE-OS 28 56 369 beschreibt eine Kabelisolierung, bei der der Isolierstoff aus einem Verschnitt aus einem Homopolyolefin oder einem Copolymer und einem teilkristallinen Polymer/Polymergemisch besteht, wobei die Homo- oder Copolymerisate durch Aufpfropfen von Silanverbindungen feuchtigkeitsvernetzbar sind. Die teilkristallinen Bestandteile, die auch Polypropylen sein können, werden von der Vernetzung ausgenommen. Der Isolierstoff stellt kein vernetzbares Polypropylen dar.

Der Erfindung liegt die Aufgabe zugrunde, ein Verfahren zum Herstellen von Formkörpern auf der Basis vernetzter Polyolefine zu schaffen, das auch bei ternären Formmassen zuverlässig wirtschaftlich durchführbar ist und zu homogen vernetzten Formkörpern mit insbesondere hoher Kälteschlagzähigkeit und Wärmeformbeständigkeit führt. Besonders sollen kälteschlagzähe und wetterfeste Außen- und Innenverkleidungen für Fahrzeuge verbessert werden.

Gegenstand der Erfindung sind vernetzte Formkörper, herstellbar unter Einwirkung von Druck und Wärme aus einem Gemisch aus

a) 5 bis 70 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen

0 bis 8 Gew.-% Terkomponente,
mit einem Schmelzindex MFI (230/5) von 0,5 bis 2,0 g/10 min. und einer Zugfestigkeit größer als 5,0 $N/mm^2$ und/oder
a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus
65 bis 82 Gew.-% Ethylen
18 bis 25 Gew.-% Propylen
0 bis 8 Gew.-% Terkomponente auf Polyethylen erhältlich ist, und das einen Schmelzindex MFI (230/5) von 0,5 bis 2,0 g/10 min. und eine Zugfestigkeit größer als 5,0 $N/mm^2$ aufweist, und
b) 27 bis 92 Gew.-% Polypropylen-Homopolymer und/oder Polypropylen-Copolymer mit einem Schmelzindex MFI (230/5) von kleiner als 1 g/10 min., und
c) 3 bis 30 Gew.-% Polyethylen mit einem Schmelzindex MFI (190/5) von 15 bis 70 g/10 min., wobei der Polyethylenblock des modifizierten Ethylen-Propylen-Mischpolymerisates nach a.2) auf die Menge des Polyethylens anrechenbar ist,
in Gegenwart einer Vernetzermischung aus
d) 0,2 bis 3,5 Gew.-Teilen einer Alkoxysilanverbindung der Formel

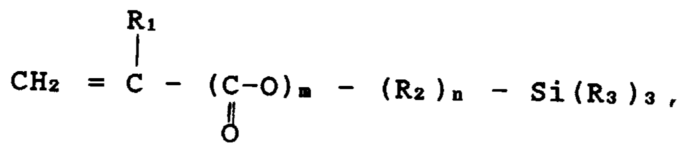

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen, $R_3$ ein Alkoxyradikal mit 1 bis 5 Kohlenstoffatomen, das gegebenenfalls durch ein Saueratom unterbrochen sein kann und m und n gleich O oder 1 sind, 0,1 bis 1,5 Gew.-Teile eines organischen Peroxids und 0,02 bis 0,20 Gew.-Teile eines Silanol-Kondensationskatalysators, bezogen auf 100 Gew.-Teile der Komponenten a) bis c).

Erfindungsgemäß wurde festgestellt, daß es durchaus möglich ist, eine Pfropfmodifizierung und Vernetzung der gesamten ternären Formmassen zu bewirken und dadurch die Kerbschlagzähigkeit sowie in Abhängigkeit von der Rezeptur auch den Biege-E-Modul zu verbessern. Bei Gehalten der Komponente a) über 25 %, besonders über 30 %, wird insbesondere die Kerbschlagzähigkeit bei Temperaturen unter 0° C, z.B. -20° C und darunter, wesentlich erhöht und ergibt dadurch Formkörper von besonderem Wert.

Formmassen mit der stofflichen Zusammensetzung nach Anspruch 1 oder einem der Unteransprüche und Gehalten der die Vernetzung bewirkenden Komponente d) haben die unerwartete Eigenschaft, bei den Bedingungen und Temperaturen der Verarbeitung zu Formkörpern zu vernetzen und eine hohe Vernetzungsdichte (vgl. Gel-Gehalt) sowie überlegene Materialeigenschaften zu ergeben.

Es zeigte sich weiter, daß bereits kleine Teile der vernetzenden Bestandteile wirksam sind. Bei kleinen Anteilen der Silane sind im allgemeinen kleine Teile der Kondensationskatalysatoren erforderlich. Weiterhin ist, bei kleinen Mengen des jeweiligen Silans auch im allgemeinen eine vergleichsweise kleine Menge des Peroxids und bei großen Mengen des jeweiligen Silans eine größere Menge Peroxid einzusetzen.

Vorzugsweise werden je 100 Gew.-Teile der Polymerkomponenten a) bis c) als vernetzend wirkender Zusatz d)
1,0 bis 2,5 Gew.-Teile der Alkoxysilanverbindung,
0,2 bis 1,0 Gew.-Teile eines organischen Peroxids und
0,02 bis 0,1 Gew.-Teile der Silanol-Kondensationskatalysatoren
zugegeben.

Geeignete Alkoxysilane sind besonders Trimethoxysilane und Triethoxysilane der genannten Formel, wobei $\gamma$-Methacryl-oxypropyltrimethoxysilan, Vinyl-trimethoxysilan (VTMO), Vinyl-tris-$\beta$-methoxyethoxysilan und Vinyl-triethoxysilan bevorzugt sind. Silane mit Siedepunkten über 170 sind bevorzugt.

Als Peroxide werden organische Peroxide bevorzugt, wobei Dicumylperoxid und Benzoylperoxid sehr bevorzugt sind. Peroxide mit einminütigen Halbwertstemperaturen von 160 bis 240° C sind bevorzugt.

Als Kondensationskatalysatoren sind Schwermetallsalze von Carbonsäuren, besonders organische Zinnverbindungen wie Dibutylzinndilaurat oder Dibutlyzinndiacetat geeignet, jedoch können z.B. auch Carbonsäuresalze von Eisen, Blei oder Zink, Chelate der Titansäure oder Alkylamine verwendet werden.

Die sehr bevorzugte Menge der Peroxide liegt zwischen 0,3 und 1,2 Gew.-%, wobei Dicumylperoxid (DCP) in kleineren Mengen bis 0,6 Gew.-% sehr bevorzugt verwendet wird.

Erfindungsgemäß wurde festgestellt, daß auf die Kerbschlagzähigkeit und insbesondere auf die Kerbschlagzähigkeit bei niedrigen Temperaturen die enthaltene Menge der Komponente a) von wesentlichem Einfluß ist. Besonders gute Werte werden erreicht, wenn gemäß einer bevorzugten Ausbildung der Erfindung die Komponente a) eine Zugfestigkeit von mindestens 8 $N/mm^2$, bevorzugt über 15 $N/mm^2$, besitzt.

Die bevorzugt anwesende Terkomponente des Bestandteils a) ist im allgemeinen ein Dien, insbesondere Ethylidennorbornen oder Hexadien.

Bevorzugt enthalten die Formkörper ein EPM oder EPDM mit mindestens 70 Gew.-% Ethylengehalt.

Soweit als Komponente b) ein Copolymeres vorgesehen ist, soll der Ethylengehalt unter 12 Gew.-% liegen.

Als Polyethylen der Komponente c) ist vorzugsweise ein Schmelzindex MFI (190/5) von 20 bis 40 g/10 min. vorgesehen.

Für Komponente b) ist ein Schmelzindex MFI (230/5) kleiner 0,5 g/10 min. bevorzugt, kleiner 0,1 g/10 min. sehr bevorzugt.

Vorzugsweise weisen die Formkörper gemäß der Erfindung einen Gel-Gehalt von mindestens 50 Gew.-% auf. Hohe Gel-Gehalte bewirken besonders eine starke Erhöhung der Wärmeformbeständigkeit. Andererseits kommen zur Erreichung eines besonders hohen Biege-E-Moduls in den Formkörpern auch Gel-Gehalte zwischen 30 und 50 Gew.-% in Frage.

Die vernetzten Formkörper enthalten bevorzugt als Komponente d) 0,2 bis 0,7 Gew.-Teile Dicumylperoxid, 1,0 bis 3,5 Gew.-Teile eines Silans mit einem Siedepunkt bei 760 Torr von über 170° C wie $\gamma$-Methacryloxidpropyltrimethoxysilan und 0,02 bis 0,1 Gew.-Teile Silanol-Kondensationskatalysator wie Dibutylzinndilaurat oder Dibutylzinndiacetat.

Besonders mit diesen Zusammensetzungen der Komponente d) wird ein Gel-Gehalt von mindestens 50 % erreicht. Bevorzugte vernetzte Formkörper gemäß der Erfindung weisen einen Gel-Gehalt von mindestens 50 %, eine Kerbschlagzähigkeit von mindestens 60 $KJ/m^2$ und Biegemodul von mindestens 500 $N/mm^2$, bei einem Gehalt von 5 bis 25 Gew.-% der Komponente a), auf.

Die Herstellung der vernetzten Formkörper kann beispielsweise nach der Verfahrensweise des Spritzgusses, der Extrusion oder der Kalandrierung erfolgen.

Vorzugsweise enthalten Formkörper, die durch Spritzguß hergestellt worden sind, Mengengehalte und Schmelzindexe der Komponenten gemäß Anspruch 9. Vorzugsweise enthalten Formkörper, die durch Extrusion hergestellt werden, Mengengehalte der Komponenten und deren Schmelzindexe gemäß Anspruch 10.

Vorzugsweise enthalten Formkörper, die durch Kalandrierung hergestellt worden sind, Mengengehalte der Komponenten und Schmelzindexe gemäß Anspruch 11.

Das Verfahren zum Herstellen der vernetzten Formkörper gemäß der Erfindung ist ebenso einfach wie das bekannte Verfahren zur Herstellung unvernetzter Formkörper aus ternären Mischungen und sehr vereinfacht gegenüber dem Verfahren nach DE-OS 33 46 267, wobei die Eigenschaftswerte der erfindungsgemäß hergestellten Formkörper zudem verbessert sind.

Die Herstellung der vernetzten Formkörper durch Spritzgießen, Extrudieren bzw. Kalandrieren kann bevorzugt gemäß den Ansprüchen 12 bis 15 erfolgen.

Die Zugabe der Komponente d) zu den Kunststoffbestandteilen der Komponenten a) bis c) kann in jedem Falle dadurch erfolgen, daß die Komponenten a)bis c) in feinteiliger Form, z.B. in einem Mischer, zusammen mit der Komponente d) zu einer homogenen Mischung verarbeitet werden, wobei vorzugsweise die Mischung bei Raumtemperatur erfolgt.

Insbesondere bei Verarbeitung durch Spritzguß oder Kalandrieren kann jedoch aus einem Teil der Komponenten a) bis c) und der Komponente d) eine Konzentratmischung homogen hergestellt werden. Der restliche Teil der Komponenten a) bis c) wird direkt der Spritzgußmaschine bzw. im Falle der Verarbeitung durch Kalandrieren einem Zweiwellenkneter oder Innenkneter, zusammen mit dem Konzentrat, bei Temperaturen von 150 bis 250° C zugeführt und dann das so hergestellte Plastifikat über ein Walzwerk verarbeitet.

Besonders bei der Verarbeitung durch Spritzguß ist es auch möglich, die Komponente d) direkt der Spritzgußmaschine zuzuführen.

Besonders bei der Verarbeitung durch Spritzguß oder Extrusion ist es möglich, ein homogenes Granulat durch Plastifizieren der Komponenten a) bis c) herzustellen und dieses zu granulieren und auf dieses Granulat die Komponente lediglich oberflächlich in einem Mischer, vorzugsweise bei Raumtemperatur, aufzubringen. Hierdurch kann aus demselben Granulat wahlweise durch oberflächliches Aufbringen verschiedener Komponenten d) Produkte verschiedenen Vernetzungsgrades und verschiedener Eigenschaften durch besonders Spritzgießen oder Extrusion hergestellt werden.

Direkt nach der Herstellung der Formkörper haben diese noch nicht den endgültigen Vernetzungsgrad erreicht, jedoch genügt der Einfluß der Luftfeuchte, um bei üblicher Lagerung den Vernetzungsvorgang abzuschließen. Es ist auch möglich, die Vernetzung zu beschleunigen, durch z. B. heißes Wasser wird die endgültige Vernetzung mit den zugehörigen Eigenschaften in kurzer Zeit erreicht.

Der Schmelzindex wird in g/10 min. nach DIN 53 735, die Kerbschlagzähigkeit bei verschiedenen Temperaturen nach DIN 53 453, der Biege-E-Modul nach DIN 53 452, die Wärmeformbeständigkeit Iso R 75 B nach DIN 53 461 Verfahren B, die Vicat-Temperatur nach DIN 53 460 Methode A und die Reißfestigkeit bzw. Reißdehnung nach DIN 53 455 bestimmt.

In der Zeichnung sind zwei Ausführungsbeispiele der Erfindung schematisch dargestellt:

Figur 1 zeigt einen Stoßfänger

Figur 2 zeigt ein Crashpad.

Weiterer Gegenstand der Erfindung sind Außen- oder Innenverkleidungsteile für Kraftfahrzeuge, wie Stoßfänger, Spoiler, Radkastenverkleidungen, Seitenleisten, Tür-Innenverkleidungen, Tunnelabdeckungen, Armaturenbretter od.dgl. auf Basis ternärer Polyolefinformmassen, hergestellt durch Spritzgießen, dadurch gekennzeichnet, daß sie teilvernetzt sind und herstellbar sind aus einem Gemisch von

a) 25 bis 40 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen
0 bis 8 Gew.-% Terkomponente,
mit einem Schmelzindex MFI (230/5) von 0,5 bis 2,0 g/10 min. und einer Zugfestigkeit größer als 5,0 $N/mm^2$ und/oder

a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus
65 bis 82 Gew.-% Ethylen
18 bis 25 Gew.-% Propylen
0 bis 8 Gew.-% Terkomponente
auf Polyethylen erhältlich ist und das einen Schmelzindex MFI (230/5) von 0,5 bis 2,0 g/10 min. und eine Zugfestigkeit von größer als 5 $N/mm^2$ aufweist, und

b) mindestens 30 Gew.-% Polypropylen-Homopolymer und/oder Polypropylen-Copolymer mit einem Schmelzindex MFI (230/5) von kleiner als 1 g/10 min. und

c) 3 bis 30 Gew.-% Polyethylen mit einem Schmelzindex MFI (190/5) von 15 bis 50 g/10 min., wobei der Polyethylenblock des modifizierten Ethylen-Propylen-Mischpolymerisates nach a.2) auf die Menge des Polyethylens anrechenbar ist, in Gegenwart einer Vernetzermischung aus

d) 0,2 bis 3,5 Gew.-Teilen einer Alkoxysilanverbindung der Formel

$$CH_2 = \overset{\displaystyle R_1}{\overset{|}{C}} - (\underset{\underset{\displaystyle O}{\|}}{C}{-}O)_m - (R_2)_n - Si(R_3)_3 ,$$

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen, $R_3$ ein Alkoxyradikal mit 1 bis 5 Kohlenstoffatomen, das gegebenenfalls durch ein Saueratom unterbrochen sein kann und m und n gleich O oder 1 sind, 0,1 bis 1,5 Gew.-Teile eines organischen Peroxids und 0,02 bis 0,20 Gew.-Teile eines Silanol-Kondensationskatalysators, bezogen auf 100 Gew.-Teile der Komponenten a) bis c).

Vorzugsweise sind 30 bis 40 Gew.-% der Komponente a) enthalten. Komponente a) in Mengen von 25 bis 50 Gew.-% ist für zahlreiche Zwecke vorzuziehen.

Mit der Erfindung werden Formteile vorgeschlagen, die eine Kombination wertvoller Eigenschaften in sich vereinen, durch die sie besonders geeignet für die Anwendung im Kraftfahrzeugbereich sind.

Die Witterungsbeständigkeit und stoßfestigkeit, besonders in der Kälte, ist von besonderem Wert für beispielsweise Stoßfänger und Crash Pads, wodurch hochbeanspruchte Metallteile substituierbar sind. Ebenso können Spoiler Seitenleisten und ggf. Karosserieteile wie Kotflügel hergestellt werden, die auch in der Kälte stoßfest beleiben. Von hohem Wert für Innenteile und Außenteile von Kraftfahrzeugen ist die erhöhte Wärmeformbeständigkeit, so daß diese Teile, z.B. die Trockentemperaturen nach Lackierungen ohne Schaden überstehen. Für Innenteile wie Armaturentafeln oder deren Teile, Tür-Innenverkleidungen, Tunnelabdeckungen o. dgl. ist ein hoher E-Modul erreichbar, durch geringere EPDM-Gehalte zwischen z.B.

25 und 35 oder durch geringere Vernetzungsgrade mittels geringerer Anteile der Vernetzungsmittel.

In den Beispielen wurden folgende Komponenten verwendet:

| | |
|---|---|
| $A_0$ | Polypropylen mit einem MFI < 0,3 (230/5); Dichte 0,90, Biegemodul 700 N/mm$^2$ |
| $A_1$ | Polypropylen wie $A_0$ mit 1 Gew.-% Silanol-Kondensationskatalysator (Dibutylzinndilaurat) |
| $A_2$ | Polypropylen wie $A_0$ mit 3 VTMO und 0,5 Benzoylperoxid gepfropft |
| $A_3$ | Polypropylen wie $A_0$ mit 3 VTMO und 0,5 Dicumylperoxid gepfropft |
| $B_0$ | Polyethylen mit einem MFI 20 (190/5) |
| $B_1$ | Polyethylen wie $B_0$ mit 2 VTMO und 0,05 DCP gepfropft |
| $C_0$ | EPDM mit einem MFI von 0,7 (230/5) und Reißfestigkeit von ca. 15 N/mm$^2$, mit einem Gehalt an Ethylen von 67 %, Propylen 30 % und Terkomponente (Ethylidennorbornen) 3 % |
| $C_1$ | EPDM wie $C_0$ mit 2 VTMO und 0,2 Benzoylperoxid gepfropft |
| $C_2$ | EPDM wie $C_0$ mit 2 VTMO und 0,2 Dicumylperoxid gepfropft |

Herstellung von $A_1$

100 Gew.-Teile Polypropylen $A_0$ mit einem MFI (230/5) < 0,3 g/min., einer Dichte von 0,90 g/ml und einem E-Modul von 700 N/mm$^2$ werden mit 1 Gew.-Teil Dibutylzinndilaurat vermischt und in einem Extruder bei 230°C plastifiziert und zu einem homogenen Granulat verarbeitet.

Herstellung von $A_2$

100 Gew.-Teile Polypropylen $A_0$ mit einem MFI (230/5) < 0,3 g/min., einer Dichte von 0,90 g/ml und einem E-Modul von 700 N/mm$^2$ werden mit 3 Gew.-Teilen Vinyltrimethoxysilan (VTMO) und 0,5 Gew.-Teilen Benzoylperoxid (BP) vermischt und anschließend die Schmelze in einem Extruder bei 210° C homogenisiert und dabei das Silan aufgepropft und zu einem Granulat verarbeitet.

Herstellung von $A_3$

Die Herstellung erfolgt wie unter $A_2$ beschrieben, jedoch werden anstelle von 0,5 Gew.-Teilen Benzoylperoxid 0,5 Gew.-Teile Dicumylperoxid (DCP) verwendet.

Herstellung von $B_1$

100 Gew.-Teile Polyethylen $B_0$ mit einem MFI (190/5) = 20 g/min. werden mit 2 Gew.-Teilen Vinyltrimethoxysilan und 0,05 Gew.-Teilen Dicumylperoxid vermischt. Die Propfung und Homogenisierung erfolgt anschließend auf einem Extruder bei 175° C Massetemperatur, der Austrag erfolgt als Granulat.

Herstellung von $C_1$

100 Gew.-Teile eines EPDM's mit einem Gehalt an Propylen von 30 Gew.-% und einem Gehalt an Ethylidennorbornen von 3 Gew.-% mit einem MFI (230/5) von 0,7 g/10 min. und einer Reißfestigkeit von 15 N/mm$^2$ werden mit 2 Gew.-Teilen Vinyltrimethoxysilan und 0,2 Gew.-Teilen Benzoylperoxid gemischt und auf einem Extruder bei 170° C homogenisiert und aufgepfropft und zu Granulat verarbeitet.

Herstellung von $C_2$

Die Herstellung erfolgt wie unter $C_1$ beschrieben, jedoch werden anstelle von 0,2 Gew.-Teilen Benzoylperoxid 0,2 Gew.-Teile Dicumylperoxid verwendet.

Beispiel 1 (Vergleich)

4,8 Gew.-Teile des nach $A_1$ hergestellten, den Silanolkondensationskatalysator enthaltenden Batchs werden mit 76,2 Gew.-Teilen des nach $A_3$ pfropfmodifizierten Polypropylens, mit 11,4 Gew.-Teilen des nach $B_1$ pfropfmodifizierten Polyethylens und 7,6 Gew.-Teilen des nach $C_2$ pfropfmodifizierten EPDM's vermischt und zu Testproben bei 230°C verspritzt. Die Testproben wurden 2 Tage in 95° C heißem Wasser gelagert und anschließend 6 Std. bei 80° C getrocknet. An diesen Proben wurden die in der Tabelle genannten Eigenschaften gemessen.

Beispiel 2 (Vergleich)

Die Verarbeitung erfolgte wie im Beispiel 1; als pfropfmodifiziertes Polypropylen wurde jedoch das nach $A_2$ modifizierte, als EPDM das nach $C_1$ modifizierte eingesetzt.

Beispiel 3 (Vergleich)

4,8 Gew.-Teile des silanolkondensathaltigen Batches $A_1$ wurden mit 76,2 Gew.-Teilen unmodifiziertem Polypropylen $A_0$, 11,2 Gew.-Teilen unmodifiziertem Polyethylen $B_0$ und 7,6 Gew.-Teilen unmodifiziertem EPDM $C_0$ und 3 Gew.-Teilen Vinyltrimethoxysilan und 0,5 Gew.-Teilen Benzoylperoxid vermischt und wie im Beispiel 1 verspritzt, vernetzt und geprüft.

Beispiel 4 (Vergleich)

Die Verarbeitung erfolgte wie im Beispiel 3 beschrieben. Als Peroxid wurden jedoch 0,5 Gew.-Teile Dicumylperoxid verwendet.

Beispiel 5 -10

Die in der Tabelle genannten Gew.-Teile an nicht pfropfmodifizierten Polymeren Polypropylen $A_0$,Polyethylen $B_0$ und EPDM werden mit den dort angegebenen Gew.-Teilen der die Vernetzung bewirkenden Mischung aus jeweils einem Peroxid, einem Silan und dem Dibutylzinndilaurat als Kondensationskatalysator homogen vermischt und wie im Beispiel 1 beschrieben verspritzt, vernetzt und geprüft. Aus den in der Tabelle aufgeführten gemessenen Eigenschaftswerten ist die Überlegenheit der erfindungsgemäß durch homogenes Vermischen aller Komponenten und Vernetzen aller Komponenten hergestellten Formkörper zu ersehen.

Beispiel 11

28 Gew.-Teile eines Polypropylens ($A_0$) werden mit 15 Gew.-Teilen Polyethylen ($B_0$) und 57 Gew.-Teilen eines EPDM ($C_0$) in einem Mischer bei Raumtemperatur gemischt und in einem Extruder bei Temperaturen von 210° C homogenisiert und zu Granulat verarbeitet.
Auf 100 Gew.-Teile dieses Granulats werden 0,6 Gew.-Teile $\gamma$-Methacryloxypropyltrimethoxysilan, 0,1 Gew.-Teile Dicumylperoxid und 0,05 Gew.-Teile Dibutylzinndilaurat aufgetrommelt und in einem Einspindel-Extruder, 30 mm Durchmesser, LD 20, Kompression 1 : 2,5 bei Temperaturen von 175° C zu Profilen extrudiert.
Der Gel-Gehalt (endgültige Vernetzung) beträgt 60 Gew.-%.

Beispiel 12

55 Gew.-Teile eines Polypropylens ($A_0$) werden mit 5 Gew.-Teilen Polyethylen ($B_0$), 40 Gew.-Teilen EPDM ($C_0$), 1,2 Gew.-Teilen $\gamma$-Methacryloxypropyltrimethoxysilan, 0,4 0,4 Gew.-Teilen Dicumylperoxid und 0,05 Gew.-Teilen Dibutylzinndilaurat in einem Zweiwellenkneter bei Temperaturen von 175° C plastifiziert und gepfropft.
Dieses Plastifikat wird über ein Walzwerk bei Temperaturen von 180° C in den Walzenspalt eines Vierwalzenkalandars eingeführt und zu einer 1 mm dicken Folie kalandriert. Die Kalandertemperaturen betrugen Walze 1 : 165° C, Walze 2 : 170° C, Walze 3 : 175° C und Walze 4 : 180° C.
Der Gel-Gehalt (endgültige Vernetzung) beträgt 62 Gew.-%.

TABELLE 1

Komponenten in Gew.-%

| | $A_0$ | $A_1$ | $A_2$ | $A_3$ | $B_0$ | $B_1$ | $C_0$ | $C_1$ | $C_2$ | VTMO | MEMO | DCP | BP | DBTL | Gelgehalt Gew.-% | Kerbschlag ($KJ/m^2$) $0^0C$ | Kerbschlag ($KJ/m^2$) $-20^0$ C | Biege-E-Modul ($N/mm^2$) |
|---|---|---|---|---|---|---|---|---|---|---|---|---|---|---|---|---|---|---|
| 1 | - | 4,8 | - | 76,2 | - | 11,4 | - | - | 7,6 | - | - | - | - | - | 41 | 6 | 2,7 | 693 |
| 2 | - | 4,8 | 76,2 | - | - | 11,4 | - | 7,6 | - | - | - | - | - | - | 82 | 49 | 3,0 | 693 |
| 3 | 76,2 | 4,8 | - | - | 11,4 | - | 7,6 | - | - | 3 | - | - | 0,5 | - | 10 | 63 | 3,0 | 762 |
| 4 | 76,2 | 4,8 | - | - | 11,4 | - | 7,6 | - | - | 3 | - | 0,5 | - | - | 23 | 62 | 3,1 | 630 |
| 5 | 74 | - | - | - | 10 | - | 16 | - | - | - | 1,2 | 0,4 | - | 0,05 | 57 | 76 | 7,5 | 678 |
| 6 | 74 | - | - | - | 10 | - | 16 | - | - | 3 | - | 0,5 | - | 0,05 | 35 | 66 | 11,7 | 744 |
| 7 | 66 | - | - | - | 10 | - | 24 | - | - | - | 1,2 | 0,4 | - | 0,05 | 60 | 73 | 18,0 | 506 |
| 8 | 66 | - | - | - | 10 | - | 24 | - | - | 3 | - | 0,5 | - | 0,05 | 40 | 71 | 20,6 | 543 |
| 9 | 56 | - | - | - | 10 | - | 34 | - | - | - | 1,2 | 0,4 | - | 0,05 | 74 | 67 | 30,8 | 310 |
| 10 | 40 | - | - | - | 10 | - | 50 | - | - | - | 1,2 | 0,4 | - | 0,05 | 77 | 70 | 45,0 | 175 |

**Beispiele 1 und 2 entsprechend DE-OS 33 46 267**

**Beispiele 3 und 4 zum Vergleich**

**Beispiele 5 bis 9 erfindungsgemäß**

MEMO: γ- Methacryl-oxypropyl-trimethoxysilan

Beispiel 13 (Vergleich)

56 Gew.-Teile Polypropylen mit einem MFI (230/5) von 6 werden zusammen mit 34 Gew.-Teilen EPDM mit einem MFI (230/5) von ca. 0,7 und einem Ethylengehalt von 67 % und einer Terkomponente von 3 %,

10 Gew.-Teile Polyethylen mit einem MFI von 20 (190/5), 1 Gew.-Teil Farbe und 0,6 Gew.-Teile Stabilisator und Verarbeitungshilfsmittel Zu Granulat verarbeitet und zu Formstäben verspritzt. Die Eigenschaften dieser Mischung sind in Tabelle 1 beschrieben.

Beispiel 14

56 Gew.-Teile Polypropylen mit einem MFI (230/5) von ca. 0,3 und den übrigen Mischungsanteilen des Beispiels 1 werden zu Granulat verarbeitet. Auf die Oberfläche dieses Granulats bringt man eine Vernetzermischung, bestehend aus 1,2 Gew.-Teilen $\gamma$-Methacryloxypropyl-trimethoxysilan, 0,4 Gew.-Teilen Dicumylperoxid und 0,05 Gew.-Teilen Dibutylzinndilaurat und verspritzt bei 220 bis 240° C zu Formstäben. Eigenschaften vgl. Tabelle 1.

Entsprechende Ergebnisse werden erhalten dadurch, daß die Vernetzermischung homogen mit den Polymerkomponenten vermischt und darauf die Formstäbe durch Verspritzen hergestellt werden.

Beispiel 15

Entsprechend Beispiel 14 werden Spritzgußkörper aus 40 Gew.-Teilen des genannten Polypropylens, 10 Gew.-Teilen des genannten Polyethylens und 50 Gew.-Teilen des genannten EPDM hergestellt.

Beispiel 16

Entsprechend Beispiel 14 werden 33 Gew.-Teile des genannten Polypropylens mit 15 Gew.-Teilen Polyethylen und 52 Gew.-Teilen eines EPDM in einem Mischer bei Raumtemperatur gemischt und in einem Extruder bei Temperaturen von 210° C homogenisiert und zu Granulat verarbeitet.
Auf 100 Gew.-Teile dieses Granulats werden 0,6 Gew.-Teile $\gamma$-Methacryloxypropyletrimethoxysilan, 0,1 Gew.-Teile Dicumylperoxid und 0,05 Gew.-Teile Dibutylzinndilaurat aufgetrommelt und wie in Beispiel 2 verspritzt.
Der Gel-Gehalt (endgültige Vernetzung) beträgt 60 Gew.-%.

Beispiel 17

Entsprechend Beispiel 14 werden 55 Gew.-Teile Polypropylen mit 5 Gew.-Teilen Polyethylen, 40 Gew.-Teilen EPDM, 1,2 Gew.-Teilen $\gamma$-Methacryloxypropyltrimethorysilan, 0,4 Gew.-Teilen Dicumylperoxid und 0,05 Gew.-Teilen DIbutylzinndilaurat in einem Zweiwellenkneter bei Temperaturen von 175° C plastifiziert und verspritzt.
Der Gel-Gehalt (endgültige Vernetzung) beträgt 62 Gew.-%.

Beispiel 18

Entsprechend Beispiel 14 werden 28 Gew.-Teile EPDM, 62 Gew.-Teile des Polypropylens und 10 Gew.-Teile des Polyethylens mit den vernetzenden Bestandteilen vermischt und verspritzt.
Gel-Gehalt: über 55 Gew.-%
Biege-E-Modul: über 500
Kerbschlag (-20°C): 25

TABELLE 2

| Beisp. | Fließspir. (mm) | 80°C Reißfest. ($N/mm^2$) | 80°C Dehnung (%) | Vicat (°C) | ISO R 75 B (°C) | E-Modul ($N/mm^2$) | Kerbschl. ($KJ/m^2$) 0°C | Kerbschl. ($KJ/m^2$) -20°C |
|---|---|---|---|---|---|---|---|---|
| 13 (vergleich) | 71 | 4,3 | 300 | 104 | 68 | 450 | | |
| 14 | 66 | 5,3 | 300 | 116 | 89 | 310 | 67 | 30,8 |
| 15 | | | | | | 175 | 70 | 45,0 |

## Patentansprüche

**1.** Vernetzte Formkörper, herstellbar unter Einwirkung von Druck und Wärme aus einem Gemisch aus

a) 5 bis 70 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen
0 bis 8 Gew.-% Terkomponente,
mit einem Schmelzindex MFI (230/5) von 0,5 bis 2,0 g/10 min. und einer Zugfestigkeit größer als 5,0 N/mm$^2$ und/oder
a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus
65 bis 82 Gew.-% Ethylen
18 bis 25 Gew.-% Propylen
0 bis 8 Gew.-% Terkomponente
auf Polyethylen erhältlich ist, und das einen Schmelzindex MFI (230/5) von 0,5 bis 2,0 g/10 min. und eine Zugfestigkeit größer als 5,0 N/mm$^2$ aufweist, und
b) 27 bis 92 Gew.-% Polypropylen-Homopolymer und/oder Polypropylen-Copolymer mit einem Schmelzindex MFI (230/5) von kleiner als 1 g/10 min., und
c) 3 bis 30 Gew.-% Polyethylen mit einem Schmelzindex MFI (190/5) von 15 bis 70 g/10 min., wobei der Polyethylenblock des modifizierten Ethylen-Propylen-Mischpolymerisates nach a.2) auf die Menge des Polyethylens anrechenbar ist,
in Gegenwart einer Vernetzermischung aus
d) 0,2 bis 3,5 Gew.-Teilen einer Alkoxysilanverbindung der Formel

$$CH_2 = \overset{\displaystyle R_1 \atop |}{C} - (\underset{\| \atop O}{C}-O)_m - (R_2)_n - Si(R_3)_3 ,$$

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen,
$R_3$ ein Alkoxyradikal mit 1 bis 5 Kohlenstoffatomen, das gegebenenfalls durch ein Sauerstoffatom unterbrochen sein kann und m und n gleich O oder 1 sind,
0,1 bis 1,5 Gew.-Teile eines organischen Peroxids und
0,02 bis 0,20 Gew.-Teile eines Silanol-Kondensationskatalysators, bezogen auf 100 Gew.-Teile der Komponenten a) bis c).

2. Formkörper nach Anspruch 1, dadurch gekennzeichnet, daß eine Komponente a) vorgesehen ist, die eine Zugfestigkeit von mindestens 8 N/mm$^2$, vorzugsweise mindestens 15 N/mm$^2$ aufweist.

3. Formkörper nach Anspruch 1 oder 2, dadurch gekennzeichnet, daß ein Ethylen-Propylen-Copolymer oder ein Ethylen-Propylen-Terpolymer mit mindestens 70 Gew.-% Ethylengehalt vorgesehen ist.

4. Formkörper nach einem der vorhergehenden Ansprüche, dadurch gekennzeichnet, daß ein Polypropylen-Copolymer mit einem unter 12 Gew.-% betragenden Ethylengehalt vorgesehen ist.

5. Formkörper nach einem der vorhergehenden Ansprüche, dadurch gekennzeichnet, daß ein Polyethylen mit einem Schmelzindex MFI (190/5) zwischen 20 und 40 g/10 min. vorgesehen ist.

6. Formkörper nach einem der vorhergehenden Ansprüche, dadurch gekennzeichnet, daß eine Komponente b) mit einem Schmelzindex MFI (230/5) kleiner als 0,5 g/10 min., vorzugsweise kleiner als 0,1 g/10 min. vorgesehen ist.

7. Formkörper nach einem der vorhergehenden Ansprüche, dadurch gekennzeichnet, daß als Komponente d)
0,2 bis 0,7 Gew.-Teile Dicumylperoxid,
1,0 bis 3,5 Gew.-Teile eines Silans mit einem Siedepunkt bei 760 Torr von über 170 °C wie $\gamma$-Methacryloxypropyltrimethoxysilan, und

0,02 bis 0,1 Gew.-Teile Silanolkondensationskatalysator, wie Dibutylzinndilaurat oder Dibutylzinndiacetat vorgesehen sind.

**8.** Formkörper nach einem der Ansprüche 1 bis 7, gekennzeichnet durch einen Gel-Gehalt von mindestens 50%, eine Kerbschlagzähigkeit von mindestens 60 $KJ/m^2$ und Biegemodul von mindestens 500 $N/mm^2$ bei einem Gehalt von 5 - 25 Gew.-% der Komponente a).

**9.** Formkörper nach einem der Ansprüche 1 bis 8, herstellbar im Spritzgießverfahren aus einem Gemisch aus

a) 25 bis 40 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen
0 bis 8 Gew.-% Terkomponente,
mit einem Schmelzindex MFI (230/5) von 0,5 bis 2,0 g/10 min. und einer Zugfestigkeit größer als 5,0 $N/mm^2$ und/oder

a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus
65 bis 82 Gew.-% Ethylen
18 bis 25 Gew.-% Propylen
0 bis 8 Gew.-% Terkomponente
auf Polyethylen erhältlich ist und das einen Schmelzindex MFI (230/5) von 0,5 bis 2,0 g/10 min. und eine Zugfestigkeit von größer als 5 $N/mm^2$ aufweist, und

b) mindestens 30 Gew.-% Polypropylen-Homopolymer und/oder Polypropylen-Copolymer mit einem Schmelzindex MFI (230/5) von kleiner als 1 g/10 min., vorzugsweise kleiner als 0,5 g/10 min. und

c) 3 bis 30 Gew.-% Polyethylen mit einem Schmelzindex MFI (190/5) von 15 bis 50 g/10 min., wobei der Polyethylenblock des modifizierten Ethylen-Propylen-Mischpolymerisates nach a.2) auf die Menge des Polyethylens anrechenbar ist, in Gegenwart einer Vernetzermischung aus

d) 0,2 bis 2,5 Gew.-Teilen einer Alkoxysilanverbindung der Formel

$$CH_2 = \overset{R_1}{\overset{|}{C}} - (\underset{\underset{O}{\|}}{C}-O)_m - (R_2)_n - Si(R_3)_3,$$

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen, $R_3$ ein Alkoxyradikal mit 1 bis 5 Kohlenstoffatomen, das gegebenenfalls durch ein Sauerstoffatom unterbrochen sein kann, und m und n gleich O oder 1 sind, und
0,1 bis 1,5 Gew.-Teile eines organischen Peroxids und
0,02 bis 0,10 Gew.-Teile eines Silanol-Kondensationskatalysators, bezogen auf 100 Gew.-Teile der Komponenten a) bis c).

**10.** Formkörper nach einem der Ansprüche 1 bis 8, herstellbar im Extrusionsverfahren aus einem Gemisch aus

a) 10 bis 50 Gew.-%, vorzugsweise 25 bis 50 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen
0 bis 8 Gew.-% Terkomponente,
mit einem Schmelzindex MFI (230/5) von 0,5 bis 2,0 g/10 min. und einer Zugfestigkeit größer als 5,0 $N/mm^2$ und/oder

a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus

65 bis 82 Gew.-% Ethylen
18 bis 25 Gew.-% Propylen
0 bis 8 Gew.-% Terkomponente
auf Polyethylen hergestellt ist und das einen Schmelzindex MFI (230/5) von 0,5 bis 2,0 g/10 min. und eine Zugfestigkeit von größer als 5 $N/mm^2$ aufweist, und

b) 30 bis 87 Gew.-% Polypropylen-Homopolymer und/oder Polypropylen-Copolymer mit einem Schmelzindex MFI (230/5) von kleiner als 1 g/10 min., vorzugsweise kleiner als 0,5 g/10 min. und

c) 3 bis 20 Gew.-% Polyethylen mit einem Schmelzindex MFI (190/5) von 15 bis 50 g/10 min., wobei der Polyethylenblock des modifzierten Ethylen-Propylen-Mischpolymerisates nach a.2) auf die Menge des Polyethylens anrechenbar ist, besteht und in Gegenwart einer Vernetzermischung aus

d) 0,2 bis 2,5 Gew.-Teilen einer Alkoxysilanverbindung der Formel

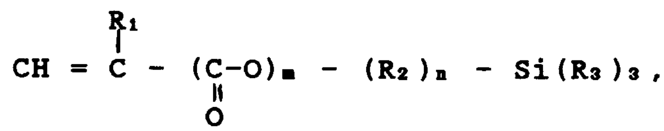

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen,
$R_3$ ein Alkoxyradikal mit 1 bis 5 Kohlenstoffatomen, das gegebenenfalls durch ein Sauerstoffatom unterbrochen sein kann, und m und n gleich 0 oder 1 sind, und
0,1 bis 1,5 Gew.-Teile eines organischen Peroxids und
0,02 bis 0,10 Gew.-Teile eines Silanol-Kondensationskatalysators, bezogen auf 100 Gew.-Teile der Komponenten a) bis c).

**11.** Formkörper nach einem der Ansprüche 1 bis 8, herstellbar im Kalandrierverfahren aus einem Gemisch aus

a) 5 bis 70 Gew.-%, vorzugsweise 25 bis 70 Gew.-%

a.1) eines teilkristallinen Ethylen-Propylen-Copolymers und/oder Ethylen-Propylen-Terpolymers aus
65 bis 82 Gew.-% Ethylen
18 bis 35 Gew.-% Propylen
0 bis 8 Gew.-% Terkomponente,
mit einem Schmelzindex MFI (230/5) von 0,5 bis 2,0 g/10 min. und einer Zugfestigkeit größer als 5,0 $N/mm^2$ und/oder

a.2) eines modifizierten Ethylen-Propylen-Mischpolymerisates, das durch Aufpolymerisieren des Anteils von Ethylen-Propylen-Copolymer und/oder Ethylen-Propylen-Terpolymer aus
65 bis 82 Gew.-% Ethylen
18 bis 25 Gew.-% Propylen
0 bis 8 Gew.-% Terkomponente
auf Polyethylen erhältlich ist und das einen Schmelzindex MFI (230/5) von 0,5 bis 2,0 g/10 min. und eine Zugfestigkeit von größer als 5 $N/mm^2$ aufweist, und

b) 27 bis 90 Gew.-% Polypropylen-Homopolymer und/oder Polypropylen-Copolymer mit einem Schmelzindex MFI (230/5) von kleiner als 1 g/10 min., vorzugsweise kleiner als 0,5 g/10 min. und

c) 3 bis 30 Gew.-% Polyethylen mit einem Schmelzindex MFI (190/5) von 15 bis 70 g/10 min., wobei der Polyethylenblock des modifizierten Ethylen-Propylen-Mischpolymerisates nach a.2) auf die Menge des Polyethylens anrechenbar ist, in Gegenwart einer Vernetzermischung aus

d) 0,2 bis 2,5 Gew. Teilen einer Alkoxysilanverbindung der Formel

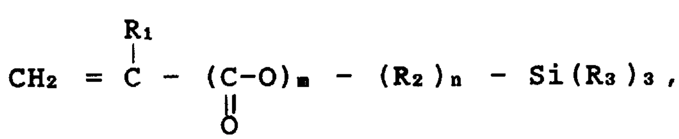

worin $R_1$ Wasserstoff oder ein Alkylradikal mit 1 bis 4 Kohlenstoffatomen, $R_2$ ein geradkettiges Alkylenradikal mit 1 bis 10 Kohlenstoffatomen,
$R_3$ ein Alkoxyradikal mit 1 bis 5 Kohlenstoffatomen, das gegebenenfalls durch ein Sauerstoffatom unterbrochen sein kann, und m und n gleich 0 oder 1 sind, und
0,1 bis 1,5 Gew.-Teile eines organischen Peroxids und
0,02 bis 0,10 Gew.-Teile eines Silanol-Kondensationskatalysators, bezogen auf 100 Gew.-Teile der Komponenten a) bis c).

**12.** Formkörper nach einem der Ansprüche 1 bis 7, dadurch gekennzeichnet, daß 25 bis 55 Gew.-%, vorzugsweise 30 bis 40 Gew.-% der Komponente a), 35 bis 70 Gew.-% der Komponente b) und 5 bis 15 Gew.-% der Komponente c) eingesetzt werden.

**13.** Verfahren zum Herstellen eines vernetzten Formkörpers nach einem der Ansprüche 1 bis 12, dadurch gekennzeichnet, daß entweder
aus allen Komponenten a) bis d) eine homogene Mischung bei Raumtemperatur hergestellt wird oder mit der Komponente d) zusammen mit Anteilen einer oder mehrerer der Komponenten a) bis c) bei Raumtemperatur eine homogene Konzentratmischung hergestellt wird und diese Konzentratmischung sowie die restlichen Anteile der Komponenten a) bis c) in eine Spritzgußmaschine eingeführt und bei Temperaturen von etwa 210 bis 300 °C plastifiziert und zu dem Formkörper verspritzt wird.

**14.** Verfahren zum Herstellen eines vernetzten Formkörpers nach einem der Ansprüche 1 bis 12, dadurch gekennzeichnet, daß aus den Komponenten a) bis c) bei Raumtemperatur eine homogene Polyolefinmischung hergestellt wird, die in eine Spritzgußmaschine eingegeben wird und die Komponente d) in die Spritzgußmaschine in einem Bereich, in dem die Polyolefinmischung bereits plastifiziert ist, bei Temperaturen von etwa 210 bis 290 °C zugegeben wird.

**15.** Verfahren zum Herstellen eines vernetzten Formkörpers nach einem der Ansprüche 1 bis 12, dadurch gekennzeichnet, daß ein homogenes Granulat aus den Komponenten a) bis c) durch Plastifizieren derselben und Granulieren hergestellt wird, danach auf das Granulat, vorzugsweise bei Raumtemperatur, die Komponente d) oberflächlich in einen Mischer aufgebracht wird und dieses benetzte Granulat direkt durch Spritzgießen oder Extrusion zum Formkörper verarbeitet wird.

**16.** Verfahren zum Herstellen eines vernetzten Formkörpers nach einem der Ansprüche 1 bis 12, dadurch gekennzeichnet, daß entweder
aus allen Komponenten a) bis d) eine homogene Mischung bei Raumtemperatur hergestellt wird oder mit der Komponente d) zusammen mit Anteilen einer oder mehrerer der Komponenten a) bis c) bei Raumtemperatur eine homogene Konzentratmischung hergestellt wird und diese Konzentratmischung zusammen mit den restlichen Anteilen der Komponenten a) bis c) in einem Zweiwellenkneter oder Innenkneter bei Temperaturen von etwa 150 bis 250 °C plastifiziert wird und danach das so hergestellte Plastifikat über ein Walzwerk mit Walzentemperaturen von etwa 180 bis 280 °C und einen Strainer in den Walzenspalt eines Kalanders, wobei die Einzugswalzen eine Temperatur von etwa 180 bis 220 °C aufweisen, gegeben und zu dem gewünschten Formkörper kalandriert werden.

## Claims

**1.** Cross-linked moulded bodies producible under the influence of pressure and heat from a mixture of
a) 5 to 70 % by weight of
a.1) a partially crystalline ethylene-propylene copolymer and/or ethylene-propylene terpolymer formed from
65 to 82 % by weight ethylene
18 to 35 % by weight propylene
0 to 8 % by weight tercomponent
and having a melt index MFI (230/5) of 0.5 to 2.0 g/10 min. and a tensile strength greater than 5.0 $N/mm^2$ and/or a
a.2) a modified ethylene-propylene copolymer which can be obtained by graft polymerisation of amounts of ethylene-propylene copolymer and/or ethylene-propylene terpolymer formed from
65 to 82 % by weight ethylene
18 to 25 % by weight propylene

0 to 8 % by weight tercomponent

onto polyethylene, and which has a melt index MFI (230/5) of 0.5 to 2.0 g/10 min. and a tensile strength greater than 5.0 N/mm$^2$, and

b) 27 to 92 % by weight of polypropylene homopolymer and/or polypropylene copolymer with a melt index MFI (230/5) of less than 1 g/10 min., and

c) 3 to 30 % by weight of polyethylene with a melt index MFI (190/5) of 15 to 70 g/10 min., with it being possible for the polyethylene block of the modified ethylene-propylene copolymer according to a.2) to be calculated on the amount of polyethylene,

in the presence of a cross-linking mixture of

d) 0.2 to 3.5 parts by weight of an alkoxysilane compound of the formula

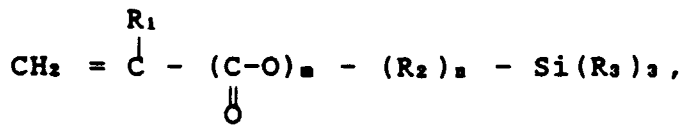

wherein $R_1$ is hydrogen or an alkyl radical with 1 to 4 carbon atoms, $R_2$ is a straight chain alkylene radical with 1 to 10 carbon atoms, $R_3$ is an alkoxy radical with 1 to 5 carbon atoms, which can be optionally interrupted by an oxygen atom, and m and n are equal to 0 or 1,

0.1 to 1.5 parts by weight of an organic peroxide and

0.02 to 0.20 parts by weight of a silanol condensation catalyst, related to 100 parts by weight of components a) to c).

**2.** Moulded body according to Claim 1, characterised in that a component a) is provided which has a tensile strength of at least 8 N/mm2, preferably at least 15 N/mm$^2$.

**3.** Moulded body according to Claim 1 or 2, characterised in that an ethylene-propylene copolymer or an ethylene-propylene terpolymer with at least 70 % by weight ethylene content is provided.

**4.** Moulded body according to one of the foregoing claims, characterised in that a polypropylene copolymer with an ethylene content amounting to less than 12 % by weight is provided.

**5.** Moulded body according to one of the foregoing claims, characterised in that a polyethylene with a melt index MFI (190/5) between 20 and 40 g/10 min. is provided.

**6.** Moulded body according to one of the foregoing claims, characterised in that a component b) with a melt index MFI (230/5) less than 0.5 g/10 min., preferably less than 0.1 g/10 min., is provided.

**7.** Moulded body according to one of the foregoing claims, characterised in that there are provided as component d)

0.2 to 0.7 parts by weight of dicumyl peroxide 1.0 to 3.5 parts by weight of a silane with a boiling point at 760 Torr of above 170°C, like $\gamma$-methacryloxypropyltrimethoxysilane, and

0.2 to 0.1 parts by weight of silanol condensation catalyst, such as dibutyltin dilaurate or dibutyltin diacetate.

**8.** Moulded body according to one of Claims 1 to 7, characterised by a gel content of at least 50 %, a notched impact of at least 60 KJ/m$^2$ and bending modulus of at least 500 N/mm$^2$ at a content of 5 to 25 % by weight of component a).

**9.** Moulded body according to one of Claims 1 to 8, producible in the injection moulding process from a mixture of

a) 25 to 40 % by weight of

a.1) a partially crystalline ethylene-propylene copolymer and/or ethylene-propylene terpolymer formed from

65 to 82 % by weight ethylene

18 to 35 % by weight propylene

0 to 8 % by weight tercomponent

with a melt index MFI (230/5) of 0.5 to 2.0 g/10 min and a tensile strength greater than 5.0 $N/mm^2$ and/or

a.2) a modified ethylene-propylene copolymer which is obtainable by graft polymerisation of the amount of ethylene-propylene copolymer and/or ethylene-propylene terpolymer formed from

65 to 82 % by weight ethylene

18 to 25 % by weight propylene

0 to 8 % by weight tercomponent

onto polyethylene and which has a melt index MFI (230/5) of 0.5 to 2.0 g/10 min. and a tensile strength of greater than 5 $N/mm^2$, and

b) at least 30 % by weight of polypropylene homopolymer and/or polypropylene copolymer with a melt index MFI (230/5) of less than 1 g/10 min., preferably less than 0.5 g/10 min., and

c) 3 to 30 % by weight of polyethylene with a melt index MFI (190/5) of 15 to 50 g/10 min, with it being possible for the polyethylene block of the modified ethylene-propylene copolymer according to a.2) to be calculated on the amount of the polyethylene, in the presence of a cross-linking mixture formed from

d) 0.2 to 2.5 parts by weight of an alkoxysilane compound of the formula

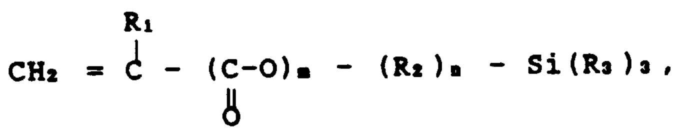

wherein, $R_1$ is hydrogen or an alkyl radical with 1 to 4 carbon atoms, $R_2$ is a straight alkylene radical with 1 to 10 carbon atoms, $R_3$ is an alkoxy radical with 1 to 5 carbon atoms, which can optionally be interrupted by an oxygen atom, and m and n are equal to 0 or 1, and 0.1 to 1.5 parts by weight or an organic peroxide and 0.02 to 1.10 parts by weight of a silanol condensation catalyst, related to 100 parts by weight of components a) to c).

**10.** Moulded body according to one of Claims 1 to 8, producible in the extrusion procedure from a mixture of

a) 10 to 50 % by weight, preferably 25 to 50 % by weight, of

a.1) a partially crystalline ethylene-propylene copolymer and/or ethylene-propylene terpolymer formed from

65 to 82 % by weight ethylene

18 to 35 % by weight propylene

0 to 8 % by weight tercomponent

with a melt index MFI (230/5) of 0.5 to 2.0 g/10 min and a tensile strength greater than 5.0 $N/mm^2$ and/or

a.2) a modified ethylene-propylene copolymer which is obtainable by graft polymerisation of the content of ethylene-propylene copolymer and/or ethylene-propylene terpolymer formed from

65 to 82 % by weight ethylene

18 to 25 % by weight propylene

0 to 8 % by weight tercomponent

onto polyethylene and which has a melt index MFI (230/5) of 0.5 to 2.0 g/10 min. and a tensile strength of greater than 5$N/mm^2$, and

b) 30 to 87 % by weight of polypropylene homopolymer and/or polypropylene copolymer with a melt index MFI (230/5) of less than 1 g/10 min., preferably less than 0.5 g/10 min., and

c) 3 to 20 % by weight of polyethylene with a melt index MFI (190/5) of 15 to 50 g/10 min, with it being possible for the polyethylene block of the modified ethylene-propylene copolymer according to a.2) to be calculable on the amount of the polyethylene, in the presence of a cross-linking mixture formed from

d) 0.2 to 2.5 parts by weight of an alkoxysilane compound of the formula

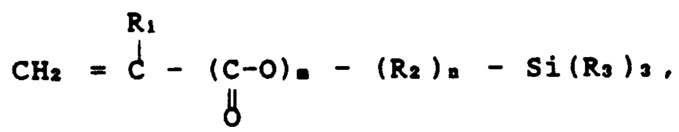

wherein, $R_1$ is hydrogen or an alkyl radical with 1 to 4 carbon atoms, $R_2$ is a straight alkylene radical with 1 to 10 carbon atoms, $R_3$ is an alkoxy radical with 1 to 5 carbon atoms, which can optionally be interrupted by an oxygen atom, and m and n are equal to 0 or 1, and
0.1 to 1.5 parts by weight or an organic peroxide and
0.02 to 1.10 parts by weight of a silanol condensation catalyst, related to 100 parts by weights of components a) to c).

**11.** Moulded body according to one of Claims 1 to 8, producible in the calendering procedure from a mixture
a) 5 to 70 % by weight, preferably 25 to 70 % by weight of
a.1) a partially crystalline ethylene-propylene copolymer and/or ethylene-propylene terpolymer formed from
65 to 82 % by weight ethylene
18 to 35 % by weight propylene
0 to 8 % by weight tercomponent
with a melt index MFI (230/5) of 0.5 to 2.0 g/10 min and a tensile strength greater than 5.0 $N/mm^2$ and/or
a.2) a modified ethylene-propylene copolymer which is obtainable by graft polymerisation of the amount of ethylene-propylene copolymer and/or ethylene-propylene terpolymer formed from
65 to 82 % by weight ethylene
18 to 25 % by weight propylene
0 to 8 % by weight tercomponent
onto polyethylene and which has a melt index MFI (230/5) of 0.5 to 2.0 g/10 min. and a tensile strength of greater than 5 $N/mm^2$, and
b) 27 to 90 % by weight of polypropylene homopolymer and/or polypropylene copolymer with a melt index MFI (230/5) of less than 1 g/10 min., preferably less than 0.5 g/10 min., and
c) 3 to 30 % by weight of polyethylene with a melt index MFI (190/5) of 15 to 50 g/10 min, with the polyethylene block of the modified ethylene-propylene copolymer according to a.2) being calculable on the amount of the polyethylene, in the presence of a cross-linking mixture formed from
d) 0.2 to 2.5 parts by weight of an alkoxysilane compound of the formula

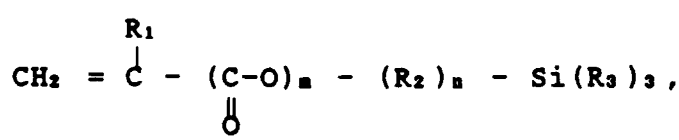

wherein, $R_1$ is hydrogen or an alkyl radical with 1 to 4 carbon atoms, $R_2$ is a straight alkylene radical with 1 to 10 carbon atoms, $R_3$ is an alkoxy radical with 1 to 5 carbon atoms, which can optionally be interrupted by an oxygen atom, and m and n are equal to 0 or 1, and
0.1 to 1.5 parts by weight or an organic peroxide and
0.02 to 1.10 parts by weight of a silanol condensation catalyst, related to 100 parts by weight of components a) to c).

**12.** Moulded body according to one of Claims 1 to 7, characterised in that 25 to 55 % by weight, preferably 30 to 40 % by weight of component a), 35 to 70 % by weight of component b) and 5 to 15 % by weight of component c) are employed.

**13.** Process for the production of a cross-lined moulded body according to one of Claims 1 to 12, characterised in that either there is produced at room temperature from all the components a) to d) a

homogenous mixture or there is produced at room temperature with component d) together with proportions of one or several components a) to c) a homogenous concentrate mixture and this concentrate mixture as well as the residual amount of component a) to c) is introduced into an injection moulding machine and is plasticized and is injected to form a moulded body at temperatures of about 210 to 300°C.

**14.** Process for the production of a cross-linked moulded body according to one of Claims 1 to 12, characterised in that there is produced at room temperature from components a) to c) a homogenous polyolefin mixture which is introduced into an injection moulding machine and component d) is supplied at temperatures of about 210 to 290°C to the injection moulding machine in a region in which the polyolefin mixture is already plasticized.

**15.** Process for the production of a cross-linked moulded body according to one of Claims 1 to 12, characterised in that a homogenous granulate is produced from component a) to c) by plasticization thereof and granulation, then component d) is applied in a mixer, preferably at room temperature, to the surface of the granulate and this wetted granulate is processed directly by injection moulding or extrusion to the moulded body.

**16.** Process for the production of a cross-linked moulded body according to one of Claims 1 to 12, characterised in that either
there is produced at room temperature from all the components a) to d) a homogenous mixture or there is produced at room temperature with component d) together with amounts of one or several of components a) to c) a homogenous concentrate mixture and this concentrate mixture together with the residual amounts of components a) to c) is plasticized in a twin screw kneader or internal kneader at temperatures of about 150 to 250°C and then the plasticizate thus produced is supplied by means of a roller device with roller temperatures of about 180 to 280°C and a strainer to the roll gap of a calender, with the entry rollers having a temperature of about 180 to 220°C, and is calendered to the desired moulded body.

## Revendications

**1.** Article façonné réticulé, préparable par action de la pression et de la chaleur, à partir d'un mélange de :

(a) 5 à 70 % en poids de :

(a.1) un copolymère d'éthylène et de propylène et/ou un terpolymère d'éthylène et de propylène, partiellement cristallin, constitué de 65 à 82 % en poids d'éthylène, 18 à 35 % en poids de propylène et 0 à 8 % en poids d'un troisième constituant, ayant un indice de fluidité à l'état fondu MFI (230/5) de 0, 5 à 2,0 g/10 min et une résistance à la traction supérieure à 5,0 $N/mm^2$, et/ou

(a.2) et un copolymère d'éthylène et de propylène, modifié, que l'on peut obtenir par polymérisation de la partie formée de copolymère d'éthylène et de propylène et/ou de terpolymère d'éthylène et de propylène, constitué de 65 à 82 % en poids d'éthylène, 18 à 25 % en poids de propylène et 0 à 8 % en poids d'un troisième constituant, sur du polyéthylène, et qui présente un indice de fluidité à l'état fondu MFI (230/5) de 0,5 à 2,0 g/10 min et une résistance à la traction supérieure à 5,0 $N/mm^2$, et

(b) 27 à 92 % en poids d'homopolymère de polypropylène et/ou de copolymère de polypropylène, ayant un indice de fluidité à l'état fondu MFI (230/5) inférieur à 1 g/10 min, et

(c) 3 à 30 % en poids de polyéthylène ayant un indice de fluidité à l'état fondu MFI (190/5) de 15 à 70 g/10 min,

le bloc polyéthylène du copolymère d'éthylène et de propylène, modifié, selon (a.2) pouvant être pris sur la quantité du polyéthylène,

en présence d'un mélange réticulant constitué de :

(d) 0,2 à 3,5 parties en poids d'un alcoxysilane de formule :

$$CH_2 = \overset{\overset{\displaystyle R_1}{|}}{C} - (\underset{\underset{\displaystyle O}{\|}}{C}\text{-}O)_m - (R_2)_n - Si(R_3)_3$$

dans laquelle $R_1$ représente un atome d'hydrogène ou un groupe alkyle ayant 1 à 4 atomes de carbone, $R_2$ représente un groupe alkylène à chaîne droite, ayant 1 à 10 atomes de carbone, $R_3$ représente un groupe alcoxy ayant 1 à 5 atomes de carbone, qui peut éventuellement être interrompu par un atome d'oxygène, et m et n sont égaux à 0 ou 1,

0,1 à 1,5 partie en poids d'un peroxyde organique, et

0,02 à 0,20 partie en poids d'un catalyseur de condensation de silanol,

les parties étant rapportées à 100 parties en poids des constituants (a) à (c).

**2.** Article façonné selon la revendication 1, caractérisé en ce qu'il est prévu un constituant (a) qui présente une résistance à la traction d'au moins 8 N/$mm^2$, de préférence d'au moins 15 N/$mm^2$.

**3.** Article façonné selon la revendication 1 ou 2, caractérisé en ce qu'il est prévu un copolymère d'éthylène et de propylène ou un terpolymère d'éthylène et de propylène, ayant une teneur en éthylène d'au moins 70 % en poids.

**4.** Article façonné selon l'une des revendications précédentes, caractérisé en ce qu'il est prévu un copolymère de polypropylène ayant une teneur en éthylène inférieure à 12 % en poids.

**5.** Article façonné selon l'une des revendications précédentes, caractérisé en ce qu'il est prévu un polyéthylène ayant un indice de fluidité à l'état fondu MFI (190/5) compris entre 20 et 40 g/10 min.

**6.** Article façonné selon l'une des revendications précédentes, caractérisé en ce qu'il est prévu un constituant (b) ayant un indice de fluidité à l'état fondu MFI (230/5) inférieur à 0,5 g/10 min, de préférence inférieur à 0,1 g/10 min.

**7.** Article façonné selon l'une des revendications précédentes, caractérisé en ce qu'il est prévu, en tant que constituant (d), 0,2 à 0,7 partie en poids de peroxyde de dicumyle, 1,0 à 3,5 parties en poids d'un silane ayant un point d'ébullition supérieur à 170 °C, sous une pression de 760 Torr, tel que le $\gamma$-méthacryloxypropyltriméthoxysilane, et 0,02 à 0,1 partie en poids d'un catalyseur de condensation de silanol, tel que le dilaurate de dibutylétain ou le diacétate de dibutylétain.

**8.** Article façonné selon l'une des revendications 1 à 7, caractérisé par une teneur en gel d'au moins 50 %, une résistance au choc sur barreau entaillé d'au moins 60 KJ/$m^2$ et un module de flexion d'au moins 500 N/$mm^2$, pour une teneur en constituant (a) de 5 à 25 % en poids.

**9.** Article façonné selon l'une des revendications 1 à 8, préparable par un procédé de moulage par injection, à partir d'un mélange de :

(a) 25 à 40 % en poids de :

(a.1) un copolymère d'éthylène et de propylène et/ou un terpolymère d'éthylène et de propylène, partiellement cristallin, constitué de 65 à 82 % en poids d'éthylène, 18 à 35 % en poids de propylène et 0 à 8 % en pois d'un troisième constituant, ayant un indice de fluidité à l'état fondu MFI (230/5) de 0,5 à 2,0 g/10 min et une résistance à la traction supérieure à 5,0 N/$mm^2$, et/ou

(a.2) un copolymère d'éthylène et de propylène, modifié, que l'on peut obtenir par polymérisation de la partie formée de copolymère d'éthylène et de propylène et/ou de terpolymère d'éthylène et de propylène, constitué de 65 à 82 % en poids d'éthylène, 18 à 25 % en poids de propylène et 0 à 8 % en poids d'un troisième constituant, sur du polyéthylène, et qui présente un indice de fluidité à l'état fondu MFI (230/5) de 0,5 à 2,0 g/ 10 min et une résistance à la traction supérieure

à 5 $N/mm^2$, et

(b) au moins 30 % en poids d'homopolymère de polypropylène et/ou de copolymère de polypropylène, ayant un indice de fluidité à l'état fondu MFI (230/5) inférieur à 1 g/10 min, de préférence inférieur à 0,5 g/10 min, et

(c) 3 à 30 % en poids de polyéthylène ayant un indice de fluidité à l'état fondu MFI (190/5) de 15 à 50 g/10 min,

le bloc polyéthylène du copolymère d'éthylène et de propylène, modifié, selon (a.2) pouvant être pris sur la quantité du polyéthylène,

en présence d'un mélange réticulant constitué de :

(d) 0,2 à 2,5 parties en poids d'un alcoxysilane de formule :

$$CH_2 = \overset{\overset{R_1}{|}}{C} - (\underset{\underset{O}{\|}}{C}-O)_m - (R_2)_n - Si(R_3)_3$$

dans laquelle $R_1$ représente un atome d'hydrogène ou un groupe alkyle ayant 1 à 4 atomes de carbone, $R_2$ représente un groupe alkylène à chaîne droite, ayant 1 à 10 atomes de carbone, $R_3$ représente un groupe alcoxy ayant 1 à 5 atomes de carbone, qui peut éventuellement être interrompu par un atome d'oxygène, et m et n sont égaux à 0 ou 1, et

0,1 à 1,5 partie en poids d'un peroxyde organique, et

0,02 à 0,10 partie en poids d'un catalyseur de condensation de silanol,

les parties étant rapportées à 100 parties en poids des constituants (a) à (c).

**10.** Article façonné selon l'une des revendications 1 à 8, préparable par un procédé d'extrusion, à partir d'un mélange de :

(a) 10 à 50 % en poids, de préférence 25 à 50 % en poids, de :

(a.1) un copolymère d'éthylène et de propylène et/ou un terpolymère d'éthylène et de propylène, partiellement cristallin, constitué de 65 à 82 % en poids d'éthylène, 18 à 35 % en poids de propylène et 0 à 8 % en poids d'un troisième constituant, ayant un indice de fluidité à l'état fondu MFI (230/5) de 0,5 à 2,0 g/10 min et une résistance à la traction supérieure à 5,0 $N/mm^2$, et/ou

(a.2) un copolymère d'éthylène et de propylène, modifié, que l'on peut obtenir par polymérisation de la partie formée de copolymère d'éthylène et de propylène et/ou de terpolymère d'éthylène et de propylène, constitué de 65 à 82 % en poids d'éthylène, 18 à 25 % en poids de propylène et 0 à 8 % en poids d'un troisième constituant, sur du polyéthylène, et qui présente un indice de fluidité à l'état fondu MFI (230/5) de 0,5 à 2,0 g/ 10 min et une résistance à la traction supérieure à 5 $N/mm^2$, et

(b) 30 à 87 % en poids d'homopolymère de polypropylène et/ou de copolymère de polypropylène, ayant un indice de fluidité à l'état fondu MFI (230/5) inférieur à 1 g/10 min, de préférence inférieur à 0,5 g/10 min, et

(c) 3 à 20 % en poids de polyéthylène ayant un indice de fluidité à l'état fondu MFI (190/5) de 15 à 50 g/10 min,

le bloc polyéthylène du copolymère d'éthylène et de propylène, modifié, selon (a.2) pouvant être pris sur la quantité du polyéthylène,

en présence d'un mélange réticulant constitué de :

(d) 0,2 à 2,5 parties en poids d'un alcoxysilane de formule :

$$\begin{array}{lll} & R_1 & \\ & | & \\ CH_2 = & C - & (C\text{-}O)_m - (R_2)_n - Si(R_3)_3 \\ & & \;\; \| \\ & & \;\; O \end{array}$$

dans laquelle $R_1$ représente un atome d'hydrogène ou un groupe alkyle ayant 1 à 4 atomes de carbone, $R_2$ représente un groupe alkylène à chaîne droite, ayant 1 à 10 atomes de carbone, $R_3$ représente un groupe alcoxy ayant 1 à 5 atomes de carbone, qui peut éventuellement être interrompu par un atome d'oxygène, et m et n sont égaux à 0 ou 1, et

0,1 à 1,5 partie en poids d'un peroxyde organique, et

0,02 à 0,10 partie en poids d'un catalyseur de condensation de silanol,

les parties étant rapportées à 100 parties en poids des constituants (a) à (c).

**11.** Article façonné selon l'une des revendications 1 à 8, préparable par un procédé de calandrage, à partir d'un mélange de :

(a) 5 à 70 % en poids, de préférence 25 à 70 % en poids, de :

(a.1) un copolymère d'éthylène et de propylène et/ou un terpolymère d'éthylène et de propylène, partiellement cristallin, constitué de 65 à 82 % en poids d'éthylène, 18 à 35 % en poids de propylène et 0 à 8 % en poids d'un troisième constituant, ayant un indice de fluidité à l'état fondu MFI (230/5) de 0,5 à 2,0 g/10 min et une résistance à la traction supérieure à 5,0 $N/mm^2$, et/ou

(a.2) un copolymère d'éthylène et de propylène, modifié, que l'on peut obtenir par polymérisation de la partie formée de copolymère d'éthylène et de propylène et/ou de terpolymère d'éthylène et de propylène, constitué de 65 à 82 % en poids d'éthylène, 18 à 25 % en poids de propylène et 0 à 8 % en poids d'un troisième constituant, sur du polyéthylène, et qui présente un indice de fluidité à l'état fondu MFI (230/5) de 0,5 à 2,0 g/ 10 min et une résistance à la traction supérieure à 5 $N/mm^2$, et

(b) 27 à 90 % en poids d'homopolymère de polypropylène et/ou de copolymère de polypropylène, ayant un indice de fluidité à l'état fondu MFI (230/5) inférieur à 1 g/10 min, de préférence inférieur à 0,5 g/10 min, et

(c) 3 à 30 % en poids de polyéthylène ayant un indice de fluidité à l'état fondu MFI (190/5) de 15 à 70 g/10 min,

le bloc polyéthylène du copolymère d'éthylène et de propylène, modifié, selon (a.2) pouvant être pris sur la quantité du polyéthylène,

en présence d'un mélange réticulant constitué de :

(d) 0,2 à 2,5 parties en poids d'un alcoxysilane de formule :

$$\begin{array}{lll} & R_1 & \\ & | & \\ CH_2 = & C - & (C\text{-}O)_m - (R_2)_n - Si(R_3)_3 \\ & & \;\; \| \\ & & \;\; O \end{array}$$

dans laquelle $R_1$ représente un atome d'hydrogène ou un groupe alkyle ayant 1 à 4 atomes de carbone, $R_2$ représente un groupe alkylène à chaîne droite, ayant 1 à 10 atomes de carbone, $R_3$ représente un groupe alcoxy ayant 1 à 5 atomes de carbone, qui peut éventuellement être interrompu par un atome d'oxygène, et m et n sont égaux à 0 ou 1, et

0,1 à 1,5 partie en poids d'un peroxyde organique, et

0,02 à 0,10 partie en poids d'un catalyseur de condensation de silanol,

les parties étant rapportées à 100 parties en poids des constituants (a) à (c).

**12.** Article façonné selon l'une des revendications 1 à 7, caractérisé en ce que l'on utilise 25 à 55 % en poids, de préférence 30 à 40 % en poids, du constituant (a), 35 à 70 % en poids du constituant (b) et 5 à 15 % en poids du constituant (c).

**13.** Procédé de préparation d'un article façonné réticulé selon l'une des revendications 1 à 12, caractérisé en ce que l'on prépare, à la température ambiante, un mélange homogène à partir de tous les constituants (a) à (d), ou bien l'on prépare à la température ambiante, avec le constituant (d) et avec des portions d'un ou de plusieurs des constituants (a) à (c), un mélange concentré homogène et on introduit ce mélange concentré ainsi que les portions restantes des constituants (a) à (c) dans une machine de moulage par injection, et on plastifie le mélange à une température d'environ 210 °C à environ 300 °C et on le transforme en l'article façonné par moulage par injection.

**14.** Procédé de préparation d'un article façonné réticulé selon l'une des revendications 1 à 12, caractérisé en ce que l'on prépare à la température ambiante, à partir des constituants (a) à (c), un mélange homogène de polyoléfines, qui est introduit dans une machine de moulage par injection, et on ajoute le constituant (d) dans la machine de moulage par injection, dans une zone où le mélange de polyoléfines est déjà rendu plastique, à une température d'environ 210 °C à environ 290 °C.

**15.** Procédé de préparation d'un article façonné réticulé selon l'une des revendications 1 à 12, caractérisé en ce que l'on prépare un granulé homogène à partir des constituants (a) à (c), par plastification et granulation de ces derniers, puis on applique le constituant (d) en surface sur le granulé, de préférence à la température ambiante, dans un mélangeur, et on transforme directement ce granulé imprégné en l'article façonné, par moulage par injection ou par extrusion.

**16.** Procédé de préparation d'un article façonné réticulé selon l'une des revendications 1 à 12, caractérisé en ce que l'on prépare, à la température ambiante, un mélange homogène à partir de tous les constituants (a) à (d), ou bien on prépare à la température ambiante, avec le constituant (d) et avec des portions d'un ou de plusieurs des constituants (a) à (c), un mélange concentré homogène et on plastifie ce mélange concentré et les portions restantes des constituants (a) à (c) dans un malaxeur à deux cylindres ou un malaxeur interne, à une température d'environ 150 °C à environ 250 °C, puis le mélange rendu plastique ainsi préparé est introduit, par l'intermédiaire d'un mélangeur à cylindres présentant des températures de cylindres d'environ 180 à environ 280 °C et d'un filtre, dans l'espace entre cylindres d'une calandre, les cylindres d'alimentation présentant une température d'environ 180 à environ 220 °C, et est transformé par calandrage en l'article façonné souhaité.

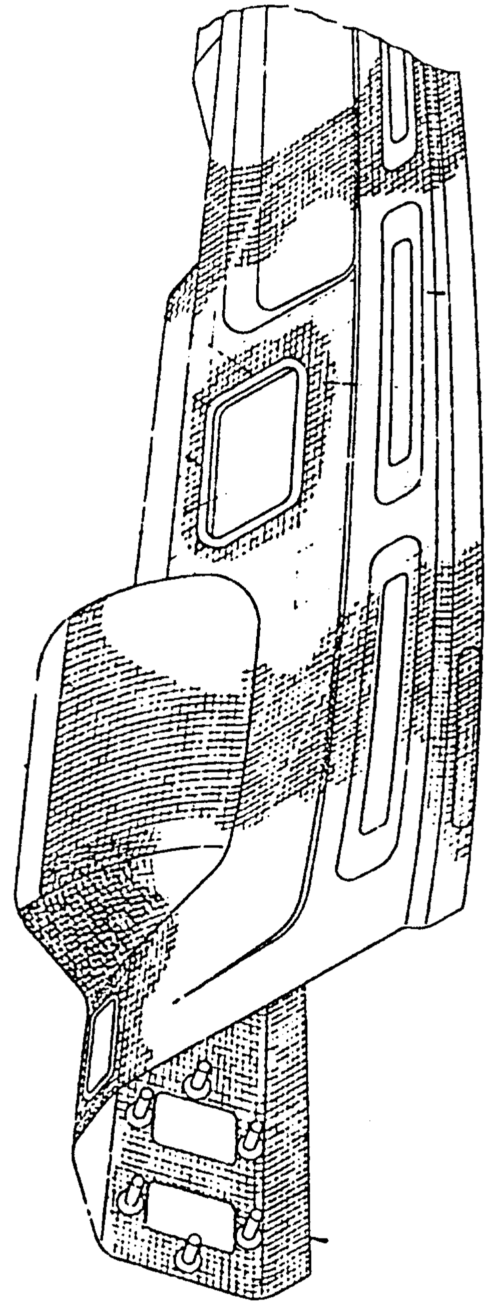

Figur 2

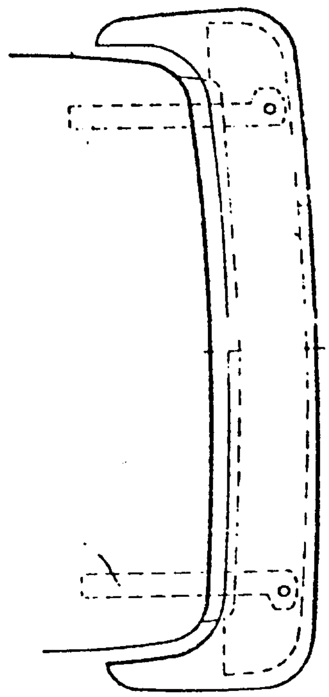

Figur 1